# DEMANDE DE BREVET EUROPEEN

(11) **EP 2 466 496 A1**
(43) Date de publication de la demande: **20.06.2012**
(21) Numéro de dépôt: 11194089.6
(22) Date de dépôt: 16.12.2011
(51) Int. Cl.: G06F 17/30

(54) **Procédé et terminal d'enrichissement de données**

(30) Priorité: 20.12.2010 FR 1060831
(71) Demandeur: France Telecom, 75015 Paris (FR)
(72) Inventeur: Meyer, Franck, 22300 Lannion (FR); Hembert, Damien, 22700 Perros-Guirec (FR)
(74) Mandataire: Pecher, Gilles

(57) **Abrégé**

Procédé d'enrichissement de données, mis un oeuvre par un terminal apte à afficher des données (D1) sélectionnées, comprenant une étape (E6) de génération d'une requête (RQ) destinée à obtenir des données complémentaires (D2), en fonction de données (D1) sélectionnées, dans lequel la requête (RQ) est générée en fonction des données (D1) sélectionnées et d'un profil d'utilisateur (UP) mémorisé dans le terminal.

## Description

### Arrière-plan de l'invention

L'invention se rapporte au domaine de la consultation de données par l'utilisateur d'un terminal apte à afficher des données. En particulier, la présente invention concerne l'enrichissement de données sélectionnées par des données complémentaires.

Dans le cadre de la présente description, on entend par « données » et « données complémentaires » toutes informations susceptibles d'être affichées par un terminal, par exemple un document bureautique, un flux d'information, une page HTML, un fichier multimédia,...

Lorsqu'un utilisateur consulte des données sur un terminal, il est courant qu'il puisse souhaiter obtenir des données complémentaires. Par exemple, si un utilisateur consulte un article sur un sujet d'actualité, il peut souhaiter obtenir une photo d'une personne mentionnée dans l'article.

A cet effet, le document US 6 546 386 propose un système permettant d'analyser le contenu d'un document affiché, et de proposer une liste de requêtes destinées à obtenir des informations complémentaires, en fonction du contenu du document analysé.

Ce système présente toutefois plusieurs inconvénients. D'une part, l'utilisateur doit sélectionner explicitement dans la liste la requête qui lui convient. Ainsi, l'obtention d'informations complémentaires nécessite une intervention de l'utilisateur. De plus, la liste de requêtes proposée dépend uniquement du contenu du document. Ainsi, elle peut ne pas être adaptée aux souhaits d'un utilisateur.

Le document US 2008/0114751 propose d'étendre une requête courante avec des mots-clés additionnels, en fonction du comportement d'un utilisateur. Le but est d'améliorer un ensemble de résultats par rapport à un ensemble précédent. Ce document ne décrit pas l'affichage simultané de données sélectionnées par un utilisateur et de données complémentaires obtenues en réponse à une requête. Il ne décrit donc pas un procédé d'enrichissement de données au sens de la présente l'invention.

Il existe donc un besoin pour améliorer l'obtention de données complémentaires destinées à enrichir des données sélectionnées.

### Objet et résumé de l'invention

L'invention propose un procédé d'enrichissement de données, mis un oeuvre par un terminal apte à afficher des données sélectionnées, comprenant une étape de génération d'une requête destinée à obtenir des données complémentaires, en fonction de données sélectionnées.

La requête est générée en fonction des données sélectionnées et d'un profil d'utilisateur mémorisé dans ledit terminal.

Corrélativement, l'invention propose un terminal comprenant :
- des moyens d'affichage aptes à afficher des données sélectionnées, et
- des moyens d'enrichissement de données incluant des moyens de génération d'une requête destinée à obtenir des données complémentaires, en fonction de données sélectionnées,
dans lequel les moyens de génération sont configurés pour générer la requête en fonction des données sélectionnées et d'un profil d'utilisateur mémorisé dans ledit terminal.

L'invention permet donc de personnaliser les données complémentaires affichées, en fonction du profil d'utilisateur. Ainsi, des mêmes données sélectionnées peuvent conduire à l'affichage de données complémentaires différentes en fonction de l'utilisateur. De plus, comme le profil d'utilisateur est mémorisé dans le terminal, on évite les problèmes de confidentialité des données personnelles qui peuvent intervenir lorsqu'un serveur mémorise des données personnelles de plusieurs utilisateurs.

Selon un mode de réalisation, le profil d'utilisateur comprend un historique, le procédé comprenant :
- une étape d'affichage de données complémentaires reçues en réponse à l'envoi de la requête,
- une étape de réception d'une commande de la part de l'utilisateur du terminal,
- une étape de mise à jour de l'historique en fonction de ladite commande.

La mise à jour de l'historique permet d'affiner la génération des requêtes ultérieures, afin d'obtenir des données complémentaires qui correspondent mieux aux souhaits de l'utilisateur.

L'historique peut comprendre un score S associé à chaque stratégie d'une liste de stratégies prédéterminées, la requête étant générée en sélectionnant une stratégie dans la liste de stratégies en fonction des scores S, l'étape de mise à jour incluant l'incrémentation ou la décrémentation du score S de la stratégie sélectionnée.

L'invention propose ainsi une technique particulièrement efficace de mémorisation d'un historique et de prise en compte de l'historique dans la génération d'une requête. Une stratégie peut correspondre à l'interrogation d'un moteur de recherche déterminé en utilisant un format déterminé. Dans une variante plus complexe, une stratégie peut correspondre à un ensemble « Type de données sélectionnées, Moteur de recherche, Format d'interrogation », par exemple « Pour des données sélectionnées de type T, rechercher des données complémentaires de type U en utilisant le moteur de recherche M ».

La stratégie peut être sélectionnée en utilisant un algorithme de sélection choisi dans un ensemble d'algorithmes de sélection.

Dans ce cas, lorsque le procédé d'enrichissement est effectué plusieurs fois, l'algorithme de sélection choisi peut être différent, ce qui permet d'explorer différentes stratégies et d'affiner le profil d'utilisateur. Un algorithme de sélection particulièrement simple consiste à sélectionner la stratégie au score le plus élevé. Un autre algorithme de sélection peut prendre en compte un facteur aléatoire pour une meilleure exploration des différentes stratégies.

Le procédé d'enrichissement peut comprendre une étape d'affichage d'un premier élément et d'un deuxième élément avec les données complémentaires, et la commande peut indiquer la sélection du premier élément ou du deuxième élément.

Dans ce cas, la mise à jour de l'historique dépend d'un retour explicite de l'utilisateur qui peut donc contrôler facilement l'affinage des requêtes successives.

Dans une variante, le procédé d'enrichissement comprend une étape d'affichage partiel desdits données complémentaires, et la commande est une commande d'affichage complet des données complémentaires. Dans une variante également, la commande est une commande impliquant l'arrêt de l'affichage des données complémentaires, l'historique étant mis à jour en fonction d'une durée écoulée entre l'affichage des données complémentaires et la réception de la commande.

Dans les deux cas précité, la mise à jour de l'historique dépend d'un retour implicite de l'utilisateur qui ne doit donc pas explicitement indiquer sa satisfaction sur les données complémentaires reçues.

L'étape de génération peut être effectuée en réponse à la sélection de données, et le procédé d'enrichissement peut comprendre :
- une étape d'envoi de la requête vers un serveur externe au terminal,
- une étape de réception de données complémentaires en réponse à l'envoi de la requête, et
- une étape d'affichage des données complémentaires.

Selon cette variante, après la sélection des données à afficher, la requête est générée et les données complémentaires sont affichées sans nécessiter l'intervention de l'utilisateur du terminal. Ainsi, le procédé d'enrichissement permet l'affichage automatique des données complémentaires. Ceci est particulièrement avantageux dans le cas d'un terminal de type téléphone mobile où l'introduction de commande par l'utilisateur peut être délicate, notamment en raison de la taille limitée de l'écran et/ou des boutons de commande du téléphone.

Le serveur peut être sélectionné dans une liste de serveurs prédéterminée en fonction des données sélectionnées et/ou du profil d'utilisateur.

Une grande variété de source d'information peut donc être contactée, en sélectionnant un serveur de manière appropriée.

Le procédé d'enrichissement peut comprendre :
- une étape de génération d'une pluralité de requêtes en fonction des données sélectionnées et du profil d'utilisateur,
- une étape d'envoi des requêtes vers des serveurs externes au terminal,
- une étape de réception d'une pluralité d'ensembles de données complémentaires en réponse à l'envoi des requêtes, et
- une étape d'affichage des données sélectionnées et des ensembles de données complémentaires, dans un ordre déterminé en fonction du profil d'utilisateur.

Cela permet à l'utilisateur du terminal d'obtenir rapidement plusieurs ensembles de données complémentaires.

Le procédé d'enrichissement peut également comprendre :
- une étape de réception de données complémentaires,
- une étape de test des données complémentaires reçues, et
- si le test est vérifié, une étape d'affichage des données complémentaires.

Autrement dit, le test permet de filtrer les données complémentaires. L'affichage de données complémentaires non désirables peut être évité.

L'invention vise aussi un programme d'ordinateur comportant des instructions pour l'exécution des étapes d'un procédé d'enrichissement conforme à l'invention lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus.

Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'un terminal conforme à un mode de réalisation de l'invention, dans son environnement,
- la figure 2 représente les principales étapes d'un procédé d'enrichissement conforme à un mode de réalisation de l'invention,
- la figure 3 représente une variante du procédé de la figure 2,
- la figure 4 représente des exemples d'affichages sur l'écran du terminal de la figure 1.

### Description détaillée d'un mode de réalisation

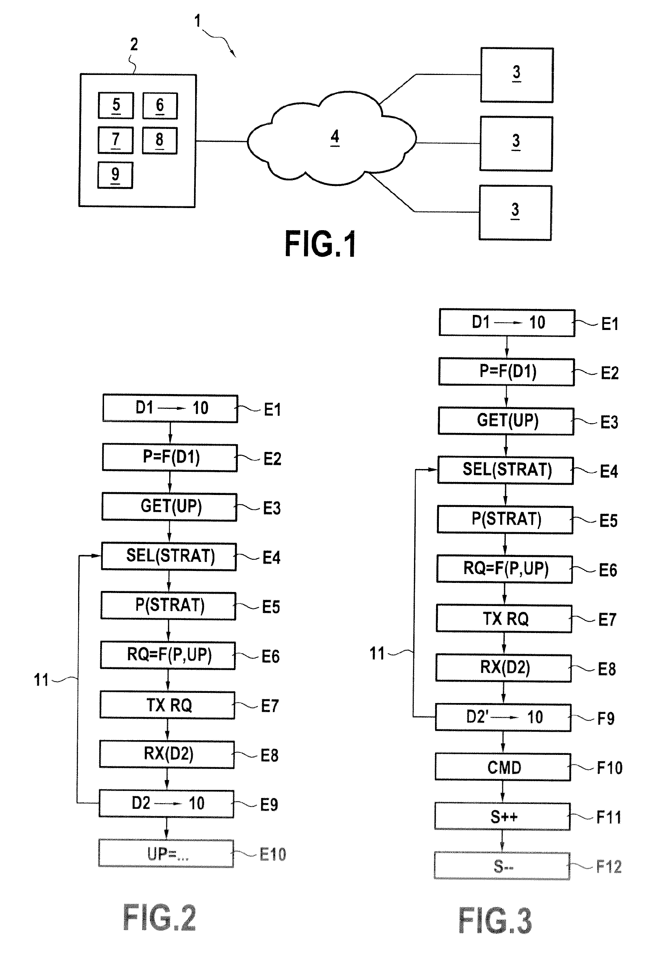

La **figure 1** représente un système 1 d'enrichissement de données, incluant un terminal 2, des serveurs 3 et un réseau de télécommunications 4.

Le terminal 2 peut être notamment un ordinateur personnel ou un téléphone portable. Il comprend un microprocesseur 5, une mémoire non-volatile 6, une mémoire volatile 7, une interface homme/machine 8 et une unité de communication 9.

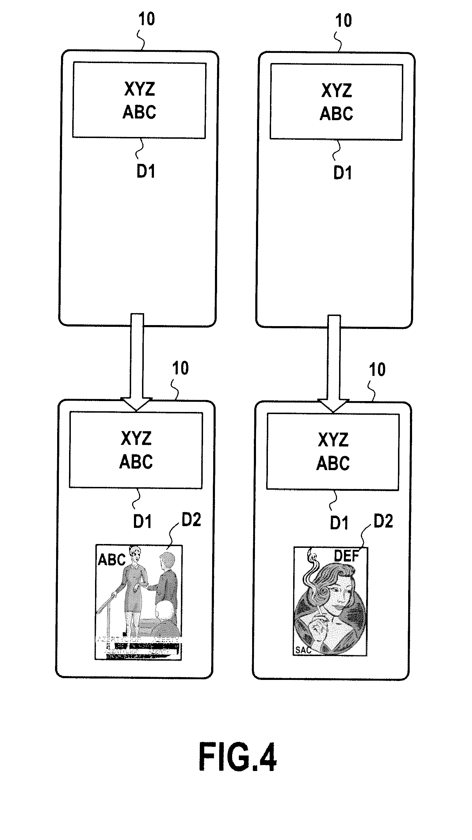

Le microprocesseur 5 permet d'exécuter des programmes d'ordinateur mémorisés dans la mémoire non-volatile 6, en utilisant la mémoire volatile 7. L'interface homme/machine 8 comprend un écran 10 (représenté sur la figure 4) permettant l'affichage de données et permet également à l'utilisateur du terminal 2 d'introduire des commandes. L'unité de communication 9 permet au terminal 2 d'envoyer des requêtes vers les serveurs 3 et de recevoir des réponses, en passant par le réseau de télécommunications 4.

Les serveurs 3 sont des serveurs qui proposent des services en lignes, permettant d'obtenir une réponse à une requête. Par exemple, un serveur 3 inclut un moteur de recherche, une base de données, une encyclopédie en ligne,...

Le terminal 2 met en oeuvre un procédé d'enrichissement permettant d'obtenir de la part d'au moins un serveur 3 des données complémentaires relatives à des données affichées sur l'écran 10. Ce procédé d'enrichissement est mis en oeuvre par un programme d'ordinateur mémorisé dans la mémoire non-volatile 6, et utilise un profil d'utilisateur mémorisé dans le terminal 2, par exemple dans la mémoire non-volatile 6 et/ou dans la mémoire volatile 7.

La **figure 2** représente les principales étapes d'un exemple de procédé d'enrichissement conforme à l'invention.

Le procédé débute à l'étape E1 par l'affichage de données D1 sélectionnées sur l'écran 10. Les données D1 peuvent inclure tout type de données aptes à être affichées. Dans l'exemple représenté sur la figure 4, les données D1 sont une fiche d'information d'un programme audiovisuelle, incluant un titre « XYZ » et un sous-titre « ABC ». Les données D1 sont par exemple obtenues en réponse à une requête initiale consistant à indiquer, dans une liste de données disponibles, les données D1 sélectionnées, Cette requête initiale peut être traitée de manière interne au terminal 2 pour obtenir des données D1 déjà présentes sur le terminal 2, ou envoyée vers un serveur externe.

Ensuite, à l'étape E2, le terminal 2 analyse les données D1. Par exemple, le terminal 2 détermine des paramètres P en fonction du contenu des données D1. Les paramètres P peuvent inclure par exemple des mots-clés et/ou une classe. Des techniques d'analyse de documents permettant d'obtenir les paramètres P sont connues de l'homme du métier et ne seront pas décrites en détail.

A l'étape E3, le programme mettant en oeuvre le procédé d'enrichissement obtient le profil d'utilisateur UP mémorisé dans le terminal 2.

A l'étape E6, le terminal 2 génère une requête RQ en fonction des paramètres P caractérisant les données D1 et du profil d'utilisateur UP. A cet effet, dans l'exemple représenté, le terminal sélectionne une stratégie de recherche (étape E4) dans une liste de stratégies prédéterminées et paramètre la stratégie sélectionnée (étape E5), en fonction des paramètres P et du profil d'utilisateur UP. Une stratégie de recherche peut correspondre par exemple à l'interrogation d'un serveur 3 déterminé selon un format de requête déterminé. Dans un exemple de réalisation, le profil d'utilisateur comprend un score S pour chaque stratégie de la liste, et la stratégie est sélectionnée en fonction des scores S.

Ensuite, le terminal 2 envoie la requête RQ à un serveur 3 (l'étape E7) puis obtient une réponse incluant des données complémentaires D2 (étape E8) et affiche les données D2 sur l'écran 10 (étape E9).

Dans un mode de réalisation, les étapes E4 à E9 sont répétées N fois (N étant un paramètre du programme contrôlant le procédé de la figure 2), comme le montre la flèche 11. Par exemple, la liste de stratégies précitée est ordonnée en fonction des scores S précités, et les étapes E4 à E9 sont répétées pour les N premières stratégies de la liste. Dans ce cas, plusieurs ensembles de données D2 sont affichés sur l'écran 10.

A l'étape E9, un premier élément permettant à l'utilisateur d'indiquer que les données D2 correspondent à ses souhaits et un deuxième élément permettant à l'utilisateur d'indiquer que les données D2 ne correspondent pas à ses souhaits sont affichés avec les données D2.

Ainsi, à l'étape E10, l'utilisateur peut sélectionner le premier élément ou le deuxième élément en introduisant une commande de sélection. Le profil d'utilisateur UP est alors mis à jour en fonction de l'élément sélectionné.

Par exemple, dans le cas d'une liste de stratégies où le profil d'utilisateur UP inclut un score S pour chaque stratégie, le score S de la stratégie ayant permis d'obtenir les données D2 est incrémenté ou décrémenté en fonction de l'élément sélectionné.

Autrement dit, dans le procédé d'enrichissement de la figure 2, un retour explicite de l'utilisateur permet de mettre à jour le profil d'utilisateur.

Dans une variante non représentée, les données D2 reçues à l'étape E8 ne sont affichées à l'étape E9 que si elles vérifient un test prédéterminé. Autrement dit, le test permet de filtrer les données D2. L'affichage de données D2 non désirables peut être évité.

La **figure 3** représente les principales étapes d'un autre exemple de procédé d'enrichissement conforme à l'invention.

Les étapes E1 à E8 de la figure 3 sont identiques aux étapes E1 à E8 de la figure 2 et ne sont plus décrites en détail.

A l'étape F9, le terminal 2 affiche partiellement les données D2 (ou plusieurs ensembles de données D2 en cas de répétitions des étapes E4 à F9). Par exemple, les données D2 contiennent un titre et un corps de texte, et seul le titre est affiché.

Ensuite, à l'étape F10, l'utilisateur du terminal 2 introduit une commande visant à afficher complètement les données D2 (ou un des ensembles de données D2 sélectionné). Dans ce cas, à l'étape F11, les données D2 sont affichées entièrement et le profil d'utilisateur UP est mis à jour en incrémentant le score S de la stratégie ayant permis d'obtenir les données D2 (ou l'ensemble sélectionné).

Autrement dit, dans le procédé d'enrichissement de la figure 2, un retour implicite de l'utilisateur, consistant à commander l'affichage complet des donnes D2, permet de mettre à jour le profil d'utilisateur.

Dans une variante non représentée, le retour implicite de l'utilisateur dépend du temps écoulé entre l'affichage complet des données D2 et l'introduction d'une commande impliquant l'arrêt de l'affichage des données D2, par exemple une commande d'affichage d'une autre page HTML.

Par ailleurs, l'absence d'introduction d'une commande visant à afficher complètement les données D2 (ou un des ensembles de données D2 sélectionné) peut être considérée comme un retour implicite négatif. Dans ce cas, le score S peut être décrémenté.

Dans une variante également, à l'étape F12, un élément permettant à l'utilisateur d'indiquer que les données D2 ne correspondent pas à ses souhaits est affiché avec les données D2. Si, à l'étape F12, l'utilisateur introduit une commande de sélection de l'élément affiché, le score S est décrémenté plus fortement qu'il n'avait été incrémenté à l'étape F10.

Les procédés d'enrichissement des figures 2 et 3 permet donc de personnaliser les données complémentaires D2 affichées, en fonction du profil d'utilisateur UP. Ainsi, la sélection de mêmes données D1 peut conduire à l'affichage de données D2 différentes en fonction de l'utilisateur. Par exemple, comme le montre la figure 4, lorsque les données D1 sont une fiche d'information sur un programme audiovisuel, l'utilisateur d'un premier terminal 2 peut obtenir, comme données D2, une image d'une jaquette du programme audiovisuel, obtenue en interrogeant un serveur 3 mémorisant ce type d'image, et l'utilisateur d'un deuxième terminal 2 peut obtenir, comme données D2, une image d'un acteur du programme audiovisuel, obtenue en interrogeant un serveur 3 d'un site d'actualité. La figure 4 montre que les données D2 sont affichées simultanément aux données D1.

De plus, après la sélection des données D1 à afficher (étape E1), la requête RQ est générée (étape E6) et les données complémentaires D2 sont affichées au moins partiellement (étapes E9 ou F9) sans nécessiter l'intervention de l'utilisateur du terminal 2. Ainsi, le procédé d'enrichissement permet l'affichage automatique des données complémentaires.

Par ailleurs, le profil d'utilisateur UP est mémorisé dans le terminal 2. On évite ainsi les problèmes de confidentialité des données personnelles qui peuvent intervenir lorsqu'un serveur mémorise des données personnelles des plusieurs utilisateurs.

On a décrit un exemple dans lequel le profil d'utilisateur UP comprend des scores S qui indiquent les préférences de l'utilisateur pour les différentes stratégies de recherche, où une stratégie de recherche correspond à l'interrogation d'un moteur de recherche déterminé en utilisant un format de recherche déterminé. En variante, le profil d'utilisateur UP peut indiquer les préférences de l'utilisateur pour un ensemble « Type de données D1, Moteur de recherche, Format de recherche ». Ainsi, dans cette variante, le profil d'utilisateur peut comprendre un score S pour différentes stratégies du type « Pour des données D1 de type T, rechercher des données complémentaires de type U en utilisant le moteur de recherche M ».

Par ailleurs, la sélection d'une stratégie de recherche peut être plus élaborée que la sélection du score S le plus élevé. Par exemple, la sélection peut être basée sur les meilleurs ratios retours positifs/retours négatifs. La sélection peut également faire intervenir de l'aléatoire pour permettre la découverte des préférences de l'utilisateur. Dans ce cas, le profil d'utilisateur UP peut être plus complexe. Lorsque l'on exécute plusieurs fois le procédé d'enrichissement, il est possible d'utiliser différents algorithmes de sélection de stratégie.

## Revendications

1. Procédé d'enrichissement de données, mis un oeuvre par un terminal (2) apte à afficher des données (D1) sélectionnées, comprenant, en réponse à la sélection de données (D1) :
- une étape (E6) de génération d'une requête (RQ) destinée à obtenir des données complémentaires (D2), en fonction des données (D1) sélectionnées,
- une étape (E7) d'envoi de ladite requête vers un serveur (3) externe au terminal (2),
- une étape (E8) de réception de données complémentaires (D2) en réponse à l'envoi de ladite requête, et
- une étape (E9, F9, F11) d'affichage simultané des données sélectionnées (D1) et des données complémentaires (D2),
**caractérisé en ce que** ladite requête (RQ) est générée en fonction des données (D1) sélectionnées et d'un profil d'utilisateur (UP) mémorisé dans ledit terminal (2).

2. Procédé d'enrichissement selon la revendication 1, dans lequel ledit profil d'utilisateur (UP) comprend un historique, ledit procédé comprenant :
- une étape (E9, F9, F11) d'affichage de données complémentaires reçues en réponse à l'envoi de ladite requête,
- une étape (E10, F10) de réception d'une commande de la part de l'utilisateur du terminal,
- une étape (E10, F11) de mise à jour dudit historique en fonction de ladite commande.

3. Procédé d'enrichissement selon la revendication 2, dans lequel ledit historique comprend un score S associé à chaque stratégie d'une liste de stratégies prédéterminées, ladite requête (RQ) étant générée en sélectionnant (E4) une stratégie dans ladite liste de stratégies en fonction des scores S, l'étape (E10, F11) de mise à jour incluant l'incrémentation ou la décrémentation du score S de la stratégie sélectionnée.

4. Procédé d'enrichissement selon la revendication 3, dans lequel ladite stratégie est sélectionnée en utilisant un algorithme de sélection choisi dans un ensemble d'algorithmes de sélection.

5. Procédé d'enrichissement selon la revendication 2, comprenant une étape d'affichage d'un premier élément et d'un deuxième élément avec les données complémentaires, dans lequel la commande indique la sélection du premier élément ou du deuxième élément.

6. Procédé d'enrichissement selon la revendication 2, comprenant :
- une étape (F9) d'affichage partiel desdits données complémentaires,
ladite commande étant une commande d'affichage complet des données complémentaires.

7. Procédé d'enrichissement selon la revendication 2, dans lequel ladite commande est une commande impliquant l'arrêt de l'affichage des données complémentaires, ledit historique étant mis à jour en fonction d'une durée écoulée entre l'affichage des données complémentaires et la réception de ladite commande.

8. Procédé d'enrichissement selon la revendication 1, comprenant une étape (E1) d'obtention des données sélectionnées (D1) en réponse à une requête initiale.

9. Procédé d'enrichissement selon la revendication 8, dans lequel ledit serveur (3) est sélectionné dans une liste de serveurs prédéterminée en fonction des données (D1) sélectionnées et/ou du profil d'utilisateur (UP).

10. Procédé d'enrichissement selon la revendication 1, comprenant
- une étape (E6) de génération d'une pluralité de requêtes en fonction des données sélectionnées et du profil d'utilisateur,
- une étape (E7) d'envoi desdites requêtes vers des serveurs (3) externes au terminal,
- une étape (E8) de réception d'une pluralité d'ensembles de données complémentaires (D2) en réponse à l'envoi desdites requêtes, et
- une étape (E9, F9, F11) d'affichage des données sélectionnées et des ensembles de données complémentaires, dans un ordre déterminé en fonction du profil d'utilisateur.

11. Procédé d'enrichissement selon la revendication 1, comprenant
- une étape (E8) de réception de données complémentaires (D2),
- une étape de test des données complémentaires reçues, et
- si ledit test est vérifié, une étape d'affichage (E9, F9, F11) des données complémentaires.

12. Programme d'ordinateur comportant des instructions pour l'exécution des étapes d'un procédé d'enrichissement selon la revendication 1 lorsque ledit programme est exécuté par un ordinateur.

13. Support d'informations lisible par un ordinateur, et comportant des instructions d'un programme d'ordinateur selon la revendication 12.

14. Terminal (2) comprenant :
- des moyens d'affichage (10) aptes à afficher des données sélectionnées (D1), et
- des moyens d'enrichissement de donnés (5) activés en réponse à la sélection de données (D1), lesdits moyens d'enrichissement de données (5) incluant :
- des moyens de génération (5) d'une requête (RQ) destinée à obtenir des données complémentaires (D2), en fonction de données (D1) sélectionnées,
- des moyens d'envoi de ladite requête vers un serveur (3) externe au terminal (2),
- des moyens de réception de données complémentaires (D2) en réponse à l'envoi de ladite requête, et
- des moyens d'affichage simultané des données sélectionnées (D1) et des données complémentaires (D2),
**caractérisé en ce que** lesdites moyens de génération (5) sont configurés pour générer la requête en fonction des données (D1) sélectionnées et d'un profil d'utilisateur (UP) mémorisé dans ledit terminal (2).
